# EUROPÄISCHE PATENTSCHRIFT

(11) **EP 4 146 604 B1**
(45) Veröffentlichungstag und Bekanntmachung des Hinweises auf die Patenterteilung: **17.04.2024**
(21) Anmeldenummer: 21718594.1
(22) Anmeldetag: 19.04.2021
(51) Int. Cl.: C03B 23/023, C03B 23/025, C03B 23/03, C03C 17/00, C03C 17/22, C03C 17/25, C03C 17/34, C03C 17/04

(54) **VERFAHREN ZUM BIEGEN EINER GLASSCHEIBE MIT EINEM MASKIERUNGSBEREICH UND EINEM DURCHSICHTSBEREICH**
METHOD FOR BENDING A GLASS SHEET WITH A MASKING AREA AND A TRANSPARENT AREA
PROCÉDÉ DE CINTRAGE D'UNE VITRE DE VERRE DOTÉE D'UNE ZONE DE MASQUAGE ET D'UNE ZONE TRANSPARENTE

(30) Priorität: 05.05.2020 EP 20172832
(43) Veröffentlichungstag der Anmeldung: 15.03.2023
(73) Patentinhaber: Saint-Gobain Glass France, 92400 Courbevoie (FR)
(72) Erfinder: BORCHMANN, Nikolai, 52134 Herzogenrath (DE); BALDUIN, Michael, 52477 Alsdorf (DE); SCHALL, Günther, 52372 Kreuzau (DE)
(74) Vertreter: Feist, Florian Arno
(86) Internationale Anmeldenummer: PCT/EP2021/060008
(87) Internationale Veröffentlichungsnummer: WO 2021/223985

(56) Entgegenhaltungen:
- WO-A1-2020/165232
- US-A1- 2002 148 255

## Beschreibung

Die Erfindung betrifft ein Verfahren zum Biegen einer Glasscheibe mit einem Maskierungsbereich und einem Durchsichtsbereich.

Insbesondere im Bereich der Kraftfahrzeuge weisen Verglasungen typischerweise eine Biegung auf. Die Glasscheiben werden gebogen, indem die im Ausgangszustand plane Glasscheibe auf ihre Erweichungstemperatur erhitzt wird, so dass sie plastisch formbar wird. Dann wirkt typischerweise die gebogene Kontaktfläche eines Biegewerkzeugs auf die Glasscheibe ein, um sie mit der gewünschten Biegung zu versehen. Es sind verschiedene Verfahren zur Erzeugung einer solchen Biegung bekannt. Beim sogenannten Schwerkraftbiegen (auch *gravity bending* oder *sag bending*) wird die im Ausgangszustand plane Glasscheibe auf der Auflagefläche einer Biegeform angeordnet und auf mindestens ihre Erweichungstemperatur erwärmt, so dass sie sich unter dem Einfluss der Schwerkraft an die Auflagefläche anlegt. Bei den sogenannten Pressbiegeverfahren wird die Scheibe zwischen zwei komplementären Werkzeugen (Biegeformen) angeordnet, die gemeinsam auf die Scheibe eine Presswirkung ausüben, um die Biegung zu erzeugen. Vorrichtungen und Verfahren zum Biegen von Glasscheiben sind dem Fachmann hinlänglich aus einer Vielzahl von Veröffentlichungen bekannt. Lediglich beispielhaft sei auf EP1358131A1, EP2463247A1, WO2017178733A1, DE10314267B3, WO2007125973A1, EP0677488A2 und WG9707066A1 verwiesen.

Viele Fahrzeugscheiben weisen eine opake, üblicherweise schwarze Maskierungsbeschichtung auf, die typischerweise aus einem schwarzen Emaille ausgebildet ist. Die Maskierungsbeschichtung kann in einem peripheren, umlaufenden Randbereich aufgebracht sein, wo sie insbesondere dazu dient, den Klebstoff, mit dem die Glasscheibe mit der Fahrzeugkarosserie verbunden ist, vor UV-Strahlung zu schützen. Moderne Windschutzscheiben sind in der Nähe der oberen Kante häufig mit Kameras oder Sensoren ausgestattet, die ebenfalls mit einer Maskierungsbeschichtung verdeckt werden. Lediglich beispielhaft sein auf EP1652266A2 und DE4033188A1 verwiesen, wo solche Maskierungsbeschichtungen offenbart sind. Die Maskierungsbeschichtung wird häufig auch als Schwarzdruck oder Abdeckdruck bezeichnet.

US20020148255A1 offenbart ein Verfahren zur Herstellung einer Windschutzscheibe. Ein Maskierungsbereich einer Glasscheibe wird mit einer Maskierungsbeschichtung versehen und anschließend zurechtgeschnitten, wobei die Schnittlinie innerhalb des Maskierungsbereichs liegt, so dass die Maskierungsbeschichtung anschließend unmittelbar an die Seitenkante der Glasscheibe angrenzt. Die Glasscheibe wird dann mit einer formgleichen weiteren Glasscheibe zu einem Verbundglas laminiert.

Die Maskierungsbeschichtung wird typischerweise auf die plane Glasscheibe vor dem Biegen aufgebracht, weil sich eine gebogene Glasscheibe nur schwierig beschichten lässt. Beim anschließenden Biegen können dadurch allerdings optische Beeinträchtigungen hervorgerufen werden. Aufgrund einer höheren Absorption von Wärmestrahlung wärmt sich der mit der opaken Beschichtung versehene Maskierungsbereich stärker auf als der beschichtungsfreie Durchsichtsbereich der Glasscheibe. Das Resultat ist eine inhomogene Erwärmung der Glasscheibe, welche zu lokalen Brechkraftschwankungen führen kann, insbesondere in den an den Maskierungsbereich angrenzenden Regionen des Durchsichtsbereich. Die Brechkraftschwankungen werden bei Durchsicht durch die Glasscheibe als Verzerrungen wahrgenommen und setzen die optische Qualität der Glasscheibe deutlich herab. Die Brechkraftschwankungen werden insbesondere durch lokale Formabweichungen verursacht, welche durch eine lokal unterschiedliche Viskosität aufgrund der inhomogenen Erwärmung der Glasscheibe hervorgerufen werden. Ein weiterer möglicher Einflussfaktor sind die unterschiedlichen thermischen Ausdehnungskoeffizienten der Maskierungsbeschichtung und des Glases, die beim Erwärmen und Abkühlen zu einem unterschiedlichen Ausdehnungs- und Kontraktionsverhalten führen und dadurch mechanische Spannungen verursachen, die zu lokalen Verformungen der Glasscheibe führen.

Die nachveröffentlichte WO2020165232A1 offenbart ein Verfahren zum Biegen einer Glasscheibe mit einer Maskierungsbeschichtung und einem von dieser umgebenen Durchsichtsbereich (insbesondere Kamerabereich). Während des Biegens wird der Durchsichtsbereich mit einer abwaschbaren Deckschicht belegt, um eine inhomogene Aufheizung der Glasscheibe zu vermeiden.

Es besteht daher Bedarf an verbesserten Biegeverfahren für Glasscheiben, bei denen trotz der Anwesenheit einer Maskierungsbeschichtung eine hohe optische Qualität gewährleistet wird. Der vorliegenden Erfindung liegt die Aufgabe zugrunde, ein solches verbessertes Biegeverfahren bereitzustellen. Insbesondere sollen lokale Brechkraftunterschiede in der Nähe der Maskierungsbeschichtung vermieden werden.

Die Aufgabe der Erfindung wird erfindungsgemäß durch ein Verfahren gemäß Anspruch 1 gelöst. Bevorzugte Ausführungen gehen aus den Unteransprüchen hervor.

Das erfindungsgemäße Verfahren zum Biegen mindestens einer Glasscheibe mit mindestens einem Maskierungsbereich und mindestens einem Durchsichtsbereich umfasst die folgenden Verfahrensschritte:
(a) Bereitstellen einer planen Glasscheibe aus Kalk-Natron-Glas,
(b) Aufbringen einer permanenten opaken Maskierungsbeschichtung auf eine Oberfläche der Glasscheibe im mindestens einen Maskierungsbereich, wobei die Maskierungsbeschichtung ein Pigment und Glasfritten enthält, und Aufbringen einer opaken Temporärbeschichtung auf eine Oberfläche der Glasscheibe im mindestens einen Durchsichtsbereich, wobei die Temporärbeschichtung ein Pigment und keine Glasfritten enthält,
(c) Biegen der Glasscheibe und
(d) Entfernen der Temporärbeschichtung, wobei die Maskierungsbeschichtung auf der Glasscheibe verbleibt.

Die Erfindung beruht darauf, die Glasscheibe mit einer homogeneren Absorptionsfähigkeit gegenüber Wärmestrahlung zu versehen, so dass eine gleichmäßigere Erwärmung der Glasscheibe beim Biegen gewährleistet ist. Dazu wird nicht nur Maskierungsbeschichtung mit der permanenten Maskierungsbeschichtung versehen, sondern auch der Durchsichtsbereich mit einer temporären opaken Beschichtung. Dadurch, dass die gesamte Glasscheibe opak beschichtet ist, kann eine unterschiedliche Erwärmung verschiedener Bereiche verhindert oder zumindest der Temperaturunterschied verringert werden. Die Beschichtung im Durchsichtsbereich ist nicht permanent, sondern kann nach dem Biegen wieder entfernt werden, wobei der Durchsichtsbereich frei gegeben wird. Aufgrund der im Wesentlichen homogenen Erwärmung kann die Erzeugung lokaler Brechkraftunterscheide in der Nähe der Maskierungsbeschichtung vermieden oder zumindest verringert werden. Da durch die Temporärbeschichtung die Gesamtabsorption von Wärmestrahlung erhöht wird, ist eine weniger starke Beheizung der Biegekammern erforderlich, was zu einer Energieersparnis führt. Das sind große Vorteile der vorliegenden Erfindung.

Im Rahmen des erfindungsgemäßen Verfahrens wird zunächst eine plane Glasscheibe bereitgestellt. Die Glasscheibe ist aus Kalk-Natron-Glas gefertigt, das als Fensterglas üblich ist. Die Dicke des Glassubstrats kann den Anforderungen im Einzelfall entsprechend frei gewählt werden. Typische Dicken für Fensterscheiben, insbesondere im Fahrzeugbereich, liegen im Bereich von 1 mm bis 10 mm, insbesondere 1,5 mm bis 5 mm.

Die Glasscheibe weist zwei Hauptflächen auf und eine umlaufende, zwischen den Hauptflächen verlaufende beziehungsweise sich zwischen den Hauptflächen erstreckende Seitenkante. Wird die Glasscheibe als Fensterscheibe verwendet, so sind die beiden Hauptflächen zur Durchsicht durch die Scheibe vorgesehen und geeignet. Die beiden Hauptflächen der Glasscheibe werden im Sinne der Erfindung als Oberflächen bezeichnet.

Die Glasscheibe weist mindestens einen Maskierungsbereich auf und mindestens einen Durchsichtsbereich. Mit Maskierungsbereich wird im Sinne der Erfindung ein Bereich der Glasscheibe bezeichnet, der dafür vorgesehen ist, mit einer opaken Maskierungsbeschichtung versehen zu werden, so dass eine Durchsicht durch den Maskierungsbereich nicht möglich ist. Mit Durchsichtsbereich wird im Sinne der Erfindung ein Bereich der Glasscheibe bezeichnet, der dafür vorgesehen ist, eine Durchsicht durch die Glasscheibe zu ermöglichen, und der daher eine gewisse Transparenz oder zumindest Transluzenz aufweisen soll. Der Maskierungsbereich weist zwei einander gegenüberliegende Bereiche der Oberflächen der Glasscheibe auf, die im Sinne der Erfindung als Oberflächen des Maskierungsbereichs bezeichnet werden. Ebenso weist der Durchsichtsbereich zwei einander gegenüberliegende Bereiche der Oberflächen der Glasscheibe auf, die im Sinne der Erfindung als Oberflächen des Durchsichtsbereichs bezeichnet werden. Die Glasscheibe kann klar, getönt oder gefärbt sein, solange sie an sich nicht opak ist, sondern eine Durchsicht erlaubt.

In einer bevorzugten Ausführung ist die Glasscheibe als Fensterscheibe für ein Fahrzeug vorgesehen (Fahrzeugscheibe), insbesondere für ein Kraftfahrzeug, beispielsweise einen Personenkraftwagen, ein Lastkraftwagen oder ein Schienenfahrzeug. Die Glasscheibe kann beispielsweise eine Windschutzscheibe, Seitenscheibe, Heckscheibe oder Dachscheibe sein. Der mindestens eine Maskierungsbereich umfasst bevorzugt einen peripheren, umlaufenden Randbereich der Glasscheibe, angrenzend an die Seitenkante, mit einer Breite von bevorzugt bis zu 30 cm, beispielsweise von 1 cm bis 20 cm. Solche Maskierungsbereiche sind bei Fahrzeugscheiben üblich, um den Klebstoff, der die Scheibe mit der Fahrzeugkarosserie verbindet, zu verstecken und insbesondere vor UV-Strahlung zu schützen. Außerdem können etwaige elektrische Anschlüsse oder sonstige Elemente im Maskierungsbereich versteckt werden, so dass sie für einen Betrachter nicht sichtbar sind. Die Glasscheibe kann neben dem Randbereich einen oder mehrere weitere Maskierungsbereiche aufweisen, oder der Maskierungsbereich kann neben dem Randbereich weitere Bereiche umfassen. Dies gilt insbesondere für sogenannte Sensor- oder Kamerafelder, die dafür vorgesehen sind, mit Kameras oder Sensoren (beispielsweise Lichtsensoren, Regensensoren oder Feuchtigkeitssensoren) ausgestattet zu werden. Beruht das Prinzip des Sensors auf der Messung von Licht, so weist der Maskierungsbereich Ausnehmungen für den Strahlengang des Sensors auf. Solche Sensor- oder Kamerafelder sind insbesondere bei Windschutzscheiben üblich, wo sie typischerweise zentral in der Nähe der Oberkante direkt angrenzend an den beschichteten Randbereich angeordnet sind. Randbereich und Sensor- oder Kamerafeld bilden typischerweise einen einzelnen zusammenhängenden Maskierungsbereich. Der Durchsichtsbereich nimmt typischerweise den Großteil der Glasscheibe ein und ist zentral angeordnet, umgeben vom umlaufenden Randbereich als Maskierungsbereich.

Die Glasscheibe kann als monolithische Fahrzeugscheibe vorgesehen sein, die als Einzelglasscheibe ausgebildet ist. Die Glasscheibe kann aber auch als Bestandteil einer Verbundglasscheibe vorgesehen sein. Die Verbundglasscheibe wird aus der Glasscheibe und einer weiteren Scheibe, insbesondere einer weiteren Glasscheibe, gebildet, wobei die erfindungsgemäße Glasscheibe mit der weiteren Scheibe über eine thermoplastische Zwischenschicht verbunden sind.

In einer besonders vorteilhaften Ausführung ist die erfindungsgemäße Glasscheibe als Bestandteil einer Windschutzscheibe vorgesehen. An Windschutzscheiben werden gesetzlich und durch die Fahrzeughersteller besonders hohe Anforderungen an die optische Qualität gestellt. Die Erfindung, welche die optische Qualität deutlich verbessert, wirkt sich hier in besonders vorteilhafter Weise aus.

Der Durchsichtsbereich weist in einer bevorzugten Ausführung eine Gesamttransmission von mindestens 70% auf. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Im Maskierungsbereich wird eine permanente opake Maskierungsbeschichtung auf eine der Oberflächen der Glasscheibe aufgebracht. Die Maskierungsbeschichtung wird also auf eine Oberfläche des Maskierungsbereichs aufgebracht. Die Maskierungsbeschichtung wird ausschließlich im Maskierungsbereich aufgebracht (also nicht in Regionen des Durchsichtsbereichs) und bedeckt den Maskierungsbereich vollständig. Die Maskierungsbeschichtung wird im Sinne der Erfindung als permanent bezeichnet, weil sie dafür vorgesehen ist, dauerhaft auf der Scheibenoberfläche zu verbleiben, und sich auch nicht mehr ohne großen Aufwand entfernen lässt. Die Maskierungsbeschichtung enthält zumindest ein Pigment und Glasfritten. Die Glasfritten können aufgeschmolzen und die Maskierungsbeschichtung mit dem dadurch dauerhaft mit der Glasoberfläche verbunden (verschmolzen) werden. Das Pigment sorgt für die Opazität der Maskierungsbeschichtung. Solche Maskierungsbeschichtungen sind im Fahrzeugbereich als Abdeckdruck üblich und werden typischerweise als Emaille aufgebracht.

Im Durchsichtsbereich wird ein temporäre opake Temporärbeschichtung auf eine der Oberflächen der Glasscheibe aufgebracht. Die Temporärbeschichtung wird also auf eine Oberfläche des Durchsichtsbereichs aufgebracht. Die Temporärbeschichtung bedeckt den Durchsichtsbereich vollständig. Die Temporärbeschichtung wird im Sinne der Erfindung als temporär bezeichnet, weil sie dafür vorgesehen ist, nicht dauerhaft auf der Scheibenoberfläche zu verbleiben, sondern nur vorübergehend, nämlich während des Biegens der Glasscheibe. Die Temporärbeschichtung lässt sich relativ einfach wieder von der Scheibenoberfläche entfernen. Die Temporärbeschichtung enthält zumindest ein Pigment, aber keine Glasfritten. Das Pigment sorgt für die Opazität der Temporärbeschichtung, die aber nicht dauerhaft mit der Glasoberfläche verbunden ist, sondern nur vergleichsweise lose an ihr anhaftet, so dass sie nach dem Biegen einfach wieder entfernt werden kann.

Die Maskierungsbeschichtung wird bevorzugt auf die Glasscheibe aufgedruckt, insbesondere im Siebdruckverfahren. Dabei wird die Druckfarbe durch ein feinmaschiges Gewebe hindurch auf die Glasscheibe gedruckt. Die Druckfarbe wird dabei beispielsweise mit einer Gummirakel durch das Gewebe hindurchgepresst. Das Gewebe weist Bereiche auf, welche für die Druckfarbe durchlässig sind, neben Bereichen, welche für die Druckfarbe undurchlässig sind, wodurch die geometrische Form des Drucks festgelegt wird. Das Gewebe fungiert somit als Schablone für den Druck. Die Druckfarbe enthält mindestens ein Pigment und Glasfritten, suspendiert in einer flüssigen Phase (Lösungsmittel), beispielsweise Wasser oder organische Lösungsmittel wie Alkohole. Das Pigment ist typischerweise ein Schwarzpigment, beispielsweise Pigmentruß (*Carbon Black*), Anilinschwarz, Beinschwarz, Eisenoxidschwarz, Spinellschwarz und/oder Graphit.

Nach dem Aufdrucken der Druckfarbe wird die Glasscheibe einer Temperaturbehandlung unterzogen, wobei die flüssige Phase durch Verdampfen ausgetrieben wird und die Glasfritten aufgeschmolzen werden und sich dauerhaft mit der Glasoberfläche verbinden. Die Temperaturbehandlung wird typischerweise bei Temperaturen im Bereich von 450°C bis 700°C durchgeführt. Als Maskierungsbeschichtung verbleibt das Pigment in der durch die aufgeschmolzene Glasfritte gebildeten Glasmatrix. Die Maskierungsbeschichtung weist bevorzugt eine Dicke von 5 µm bis 50 µm auf, besonders bevorzugt von 8 µm bis 25 µm.

Die Temporärbeschichtung kann ebenfalls auf die Glasscheibe aufgedruckt werden, insbesondere im Siebdruckverfahren. Die Druckfarbe (Beschichtungslösung) enthält mindestens ein Pigment, suspendiert in einer flüssigen Phase (Lösungsmittel). Die flüssige Phase ist bevorzugt Wasser oder ein organisches Lösungsmittel, beispielsweise ein Alkohol. Das Pigment kann auch in einer Paste suspendiert sein, die im Sinne der Erfindung als hochviskose flüssige Phase aufzufassen ist. Das Pigment ist bevorzugt ein Schwarzpigment, beispielsweise Pigmentruß (*Carbon Black*), Anilinschwarz, Beinschwarz, Eisenoxidschwarz, Spinellschwarz und/oder Graphit. Die Beschichtungslosung kann außer dem Pigment weitere Bestandteile enthalten, beispielsweise Bindemittel oder Füllstoffe. Die Beschichtungslösung kann alternativ zum Drucken auch durch andere Methoden auf die Glasscheibe aufgebracht werden, beispielsweise durch Aufsprühen oder Aufpinseln.

Nach dem Aufbringen der Beschichtungslösung auf die Glasscheibe wird die Beschichtungslösung getrocknet. Dabei verdampft die flüssige Phase und als Temporärbeschichtung verbleibt das Pigment und etwaige weitere Bestandteile auf der Glasscheibe. Das Trocknen kann im Prinzip bei Umgebungstemperatur durchgeführt werden, bevorzugt wird aber eine Temperaturbehandlung durchgeführt, um die Trocknung zu beschleunigen. Die Temperaturbehandlung wird typischerweise bei Temperaturen im Bereich von 100°C bis 250°C durchgeführt. Die Temporärbeschichtung weist bevorzugt eine Dicke von 5 µm bis 50 µm auf, insbesondere von 5 µm bis 30 µm.

Zumindest wenn sich Maskierungsbeschichtung und Temporärbeschichtung nicht überlagern, sondern jeweils ausschließlich im Maskierungsbereich beziehungsweise im Durchsichtsbereich angeordnet sind oder auf verschiedenen Oberflächen der Glasscheibe angeordnet sind, kann auch zunächst die Druckfarbe der Maskierungsbeschichtung und die Beschichtungslösung der Temporärbeschichtung auf die Glasscheibe aufgebracht werden und das Trocken beziehungsweise Einbrennen im Anschluss im Rahmen einer gemeinsamen Temperaturbehandlung erfolgen.

Ein einer bevorzugten Ausführung weisen die Maskierungsbeschichtung und die Temporärbeschichtung das gleiche Pigment auf. Das ist besonders vorteilhaft hinsichtlich einer homogenen Absorption von Wärmestrahlung. Die Belegungsdichte des Pigments sollte dann auch möglichst gleich oder ähnlich sein. Die Belegungsdichte (Anzahl Pigmentteilchen pro Flächeneinheit) kann durch die Konzentration des Pigments und die Schichtdicke der jeweiligen Beschichtung beeinflusst werden.

Die Reihenfolge des Aufbringens der Maskierungsbeschichtung und der Temporärbeschichtung sind grundsätzlich nicht festgelegt. In bevorzugten Ausführungen wird zunächst die Maskierungsbeschichtung aufgebracht und durch Einbrennen dauerhaft mit der Oberfläche verbunden und die Temporärbeschichtung wird im Anschluss aufgebracht. Das ist vorteilhaft im Hinblick auf die Qualität der Maskierungsbeschichtung, welche im Vordergrund steht, da sie dauerhaft auf der Glasscheibe verbleibt. Grundsätzlich ist es aber auch möglich zunächst die Temporärbeschichtung aufzubringen und anschließend die Permanentbeschichtung, solange ihre relative Anordnung dies zulässt.

Die Temporärbeschichtung kann grundsätzlich auf die gleiche Oberfläche der Glasscheibe aufgebracht werden wie die Maskierungsbeschichtung oder auf die gegenüberliegende Oberfläche.

In einer ersten Ausführungsform der Erfindung wird die Temporärbeschichtung auf die gleiche Oberfläche der Glasscheibe aufgebracht wie die Maskierungsbeschichtung. Maskierungsbeschichtung und Temporärbeschichtung befinden sich dann auf der gleichen Oberfläche der Glasscheibe. Hierbei ist es möglich, dass die Temporärbeschichtung ausschließlich im Durchsichtsbereich aufgebracht wird. Maskierungsbeschichtung und Temporärbeschichtung grenzen dann aneinander an und bedecken insgesamt die gesamte Oberfläche der Glasscheibe. Maskierungsbeschichtung und Temporärbeschichtung sollten dann möglichst genau aufeinander abgestimmt sein, um eine möglichst gleichmäßige Absorption von Wärmestrahlung und dadurch eine möglichst gleichmäßige Erwärmung der Glasscheibe zu gewährleisten. Diese Abstimmung kann beispielsweise durch Verwendung desgleichen Pigments in der gleichen Flächenbelegung erreicht werden. Alternativ können beispielsweise spektroskopische Voruntersuchen vorgenommen werden, um zu einer ähnlichen oder der gleichen Absorption von Infrarot-Strahlung von Maskierungsbeschichtung und Temporärbeschichtung zu gelangen.

In einer besonders bevorzugten Variante der ersten Ausführungsform wird die Temporärbeschichtung dagegen nicht ausschließlich im Durchsichtsbereich, sondern auch im Maskierungsbereich aufgebracht oberhalb der Maskierungsbeschichtung. Hierzu wird zunächst die Maskierungsbeschichtung im Maskierungsbereich aufgebracht. Anschließend wird die Temporärbeschichtung im Durchsichtsbereich und im Maskierungsbereich (auf der Maskierungsbeschichtung) aufgebracht. Diese Variante hat den Vorteil, dass die oberste Schicht auf der Glasscheibe, welche in erster Linie die Absorption von Wärmestrahlung beeinflusst, durch die Temporärbeschichtung gebildet wird, so dass eine gleichmäßige Erwärmung besonders begünstigt wird. Eine Abstimmung von Maskierungsbeschichtung und Temporärbeschichtung hinsichtlich der IR-Absorption ist nicht zwingend erforderlich. Es ist grundsätzlich auch möglich, wenn auch verfahrenstechnisch aufwendig, zunächst die Temporärbeschichtung im Durchsichtsbereich aufzubringen, dann die Maskierungsbeschichtung im Maskierungsbereich und dann die Temporärbeschichtung im Maskierungsbereich auf der Maskierungsbeschichtung.

Die Temporärbeschichtung kann den Durchsichtsbereich und den Maskierungsbereich (auf der Maskierungsbeschichtung) vollständig bedecken. Die Temporärbeschichtung bedeckt die Scheibenoberfläche dann vollständig. Es ist aber auch möglich, dass Bereiche des Maskierungsbereichs von der Temporärbeschichtung ausgenommen bleiben. Dies gilt insbesondere für einen umlaufenden peripheren Randbereich, der an die Seitenkante der Glasscheibe angrenzt. Insbesondere, wenn die Temporärbeschichtung aufgedruckt wird, hat ein solcher beschichtungsfreier Randbereich verfahrenstechnische Vorteile, weil eine solche Temporärbeschichtung drucktechnisch einfacher zu realisieren ist als ein vollflächiger Druck. Die Breite des Randbereichs, welcher nicht mit der Beschichtung versehen wird, beträgt bevorzugt bis zu 10 mm, besonders bevorzugt bis zu 5 mm, beispielsweise von 1 mm bis 5 mm.

In der ersten Ausführungsform ist es vorteilhaft, wenn die Maskierungsbeschichtung eingebrannt wird, bevor die Temporärbeschichtung aufgebracht wird, um ein Ineinanderfließen der Druckfarbe der Maskierungsbeschichtung und der Beschichtungslösung der Temporärbeschichtung zu vermeiden. Alternativ, wenn auch weniger bevorzugt, kann zunächst die Beschichtungslösung der Temporärbeschichtung im Durchsichtsbereich aufgebracht und getrocknet werden, dann die Maskierungsbeschichtung im Maskierungsbereich aufgebracht und eingebrannt werden und dann optional weitere Beschichtungslösung der Temporärbeschichtung auf die Maskierungsbeschichtung aufgebracht und getrocknet werden. Auch so wird ein Ineinanderfließen verhindert. Grundsätzlich ist es auch möglich, in einer gemeinsamen Temperaturbehandlung die Maskierungsbeschichtung einzubrennen und die Temporärbeschichtung zu trocknen, insbesondere wenn ein Ineinanderfließen aufgrund einer hohen Viskosität und/oder einer geringen Verweildauer auf der Glasscheibe vernachlässigbar ist.

In einer zweiten Ausführungsform der Erfindung wird die Temporärbeschichtung auf die Oberfläche der Glasscheibe aufgebracht, welche der Oberfläche mit der Maskierungsbeschichtung gegenüberliegt. Maskierungsbeschichtung und Temporärbeschichtung befinden sich dann auf einander gegenüberliegenden Oberflächen der Glasscheibe. Hierbei ist es möglich, dass die Temporärbeschichtung ausschließlich im Durchsichtsbereich aufgebracht wird. Auch in diesem Fall kann die Temporärbeschichtung auch im Maskierungsbereich aufgebracht werden, entweder vollständig oder mit einem umlaufenden, unbeschichteten Randbereich mit einer Breite von bevorzugt bis zu 10 mm, insbesondere bis zu 5 mm. Alternativ kann die Temporärbeschichtung ausschließlich im Durchsichtsbereich angeordnet werden. Welche Variante im Anwendungsfall bevorzugt ist, hängt auch vom Biegeofen und dessen Energieeintrag ab und kann vom Fachmann den Anforderungen im Einzelfall entsprechend gewählt werden.

Auch in der zweiten Ausführungsform wird die Maskierungsbeschichtung bevorzugt eingebrannt, bevor die Temporärbeschichtung aufgebracht wird. Dann ist die Maskierungsbeschichtung, auf deren hohe Qualität es besonders ankommt, stabilisiert und kann bei der weiteren Handhabung der Glasscheibe nicht mehr beschädigt werden. Alternativ kann die Temporärbeschichtung aufgebracht und getrocknet werden und anschließend die Maskierungsbeschichtung aufgebracht und eingebrannt werden. Grundsätzlich ist es auch möglich, in einer gemeinsamen Temperaturbehandlung die Maskierungsbeschichtung einzubrennen und die Temporärbeschichtung zu trocknet.

Nachdem die Maskierungsbeschichtung und die Temporärbeschichtung auf der Glasscheibe ausgebildet wurden, wird die Glasscheibe erfindungsgemäß einem Biegeprozess unterzogen und dabei gebogen. Die Glasscheibe wird dabei auf zumindest ihre Erweichungstemperatur erhitzt, so dass sie plastisch formbar wird. Typische Temperaturen zum Biegen von Glasscheiben betragen von 500 °C bis 700 °C, insbesondere etwa 650 °C beim Biegen von Scheiben aus Kalk-Natron-Glas. Die Glasscheibe wird im erweichten Zustand mit einem oder mehreren Biegewerkzeugen bearbeitet, um sie in die gewünschte Form zu bringen. Die Biegewerkzeuge (Biegeformen) weisen Kontaktflächen mit gekrümmter Geometrie auf, an welche die Glasscheibe angepasst wird. Die Glasscheibe wird mit der Kontaktfläche des Biegewerkzeugs geformt. Die Kontaktflächen können vollflächig sein, wobei der Großteil der Glasscheibe oder sogar die gesamte Glasscheibe mit der Kontaktfläche in Kontakt kommen (Vollform). Die Kontaktflächen können auch rahmenartig ausgebildet sein, wobei nur ein umlaufender Randbereich der Glasscheibe mit der Kontaktfläche in Kontakt kommt, während der Großteil der Scheibenoberfläche nicht mit der Kontaktfläche in direkten Kontakt kommt. Die Kontaktfläche kann konvex oder konkav gekrümmt sein. Die Art des Biegeprozesses ist hierbei nicht beschränkt und kann vom Fachmann den Erfordernissen im Einzelfall entsprechend frei gewählt werden. Beispiele für verbreitete Biegeformen sind:
- Schwerkraftbiegen: Die Glasscheibe wird auf einer Biegeform abgelegt und sackt unter der Wirkung der Schwerkraft auf die Kontaktfläche der Biegeform herab, so dass sie an die Form der Kontaktfläche angepasst wird.
- Pressbiegen: Beim Pressbiegen im engeren Sinne wird die Glasscheibe zwischen zwei komplementären Biegeformen gepresst und dadurch verformt. Im weiteren Sinne werden auch solche Verfahren als Pressbiegen bezeichnet, bei denen die Glasscheibe durch einen aufwärts gerichteten Luftstrom an eine obere Biegeform mit nach unten weisender Kontaktfläche angepresst ("angeblasen") wird.
- Saugbiegen: Die Glasscheibe wird an die Kontaktfläche angesaugt, wobei zur Übermittlung der Saugwirkung bei Vollformen typischerweise Löcher in die Kontaktfläche eingebracht sind.

Die Biegeverfahren können auch konsekutiv oder simultan miteinander kombiniert werden. So kann beispielsweise mittels Schwerkraftbiegen eine Vorbiegung erfolgen und anschließend mittels Pressbiegen die endgültige Biegung. Auch wird beim Pressbiegen häufig zusätzlich eine Saugwirkung durch eines der Werkzeuge auf die Glasscheibe ausgeübt.

Ist die Glasscheibe mit der Maskierungsbeschichtung als Fahrzeugscheibe vorgesehen, so kann sie Einscheibensicherheitsglas (ESG) oder als Bestandteil eines Verbundsicherheitsglases (VSG) vorgesehen sind. Ein ESG wird strukturell nur durch die Glasscheibe mit der Maskierungsbeschichtung ausgebildet, wobei die Glasscheibe thermisch vorgespannt ist. Die Dicke einer ESG-Scheibe beträgt üblicherweise von 2 mm bis 5 mm. Bei einem VSG ist die Glasscheibe mit der Maskierungsbeschichtung über eine thermoplastische Zwischenschicht (beispielsweise eine Kunststofffolie aus Polyvinylbutyral (PVB), Ethylenvinylacetat (EVA) oder Polyurethan (PU) mit einer weiteren Scheibe verbunden. Die Glasscheibe mit der Maskierungsbeschichtung kann dabei entweder die Innenscheibe sein, die dafür vorgesehen ist, in Einbaulage dem Fahrzeuginnenraum zugewandt zu sein, oder die Außenscheibe, die dafür vorgesehen ist, in Einbaulage der äußeren Umgebung zugewandt zu sein. Die Maskierungsbeschichtung kann der weiteren Scheibe zugewandt sein, oder von der weiteren Scheibe abgewandt. Die weitere Scheibe ist bevorzugt ebenfalls eine Glasscheibe, insbesondere aus Kalk-Natron-Glas. Die weitere Scheibe kann aber auch aus anderen Glassorten gefertigt sein, beispielsweise Aluminosilikatglas, Borosilikatglas oder Quarzglas, oder auch aus transparenten Kunststoffen, beispielweise PC oder PMMA. Im Falle von Verbundsicherheitsgläsern betragen die Dicken der beiden Scheiben üblicherweise von 0,5 mm bis 3 mm.

Ist die Glasscheibe mit der Maskierungsbeschichtung als Bestandteil eines Verbundsicherheitsglases vorgesehen, wozu sie mit einer weiteren Glasscheibe laminiert werden soll, so werden die Glasscheibe mit der Maskierungsbeschichtung und die weitere Glasscheibe bevorzugt simultan kongruent gebogen. Die beiden Scheiben werden dazu flächig aufeinander angeordnet, und gemeinsam durch die Biegewerkzeuge in die gewünschte Form gebogen. So kann ihre Form ideal aufeinander abgestimmt werden. Bei herkömmlichen Biegeverfahren dieser Art wird ein Trennmittel zwischen den Scheiben angeordnet (typischerweise ein aufgestäubter Puder), um sie nach dem Biegen wieder einfach voneinander lösen zu können. In einer vorteilhaften Ausführung der Erfindung wird dagegen die mit der Temporärbeschichtung versehene Oberfläche der Glasscheibe der weiteren Glasscheibe zugewandt, so dass die Temporärbeschichtung zwischen den beiden Glasscheiben angeordnet wird. Es wird kein zusätzliches Trennmittel eingesetzt, sondern die Temporärbeschichtung wirkt als Trennmittel. Der Vorteil gegenüber herkömmlichen Trennmitteln in Form aufgestäubter Puder liegt in einem gleichmäßigeren Auftrag der Temporärbeschichtung, welche dazu bevorzugt vollflächig auf die Scheibenoberfläche aufgebracht ist. Die Maskierungsbeschichtung kann auf der der weiteren Scheibe zugewandten Oberfläche der Glasscheibe oder auf der von der weiteren Scheibe abgewandten Oberfläche der Glasscheibe angeordnet sein. Auch die weitere Glasscheibe kann mit einer Maskierungsbeschichtung und einer Temporärbeschichtung versehen sein.

In einer vorteilhaften Ausführung weist auch die weitere Glasscheibe eine Temporärbeschichtung auf, auch wenn sie nicht mit einer Maskierungsbeschichtung versehen ist. Bevorzugt ist entweder die Temporärbeschichtung der erfindungsgemäßen Glasscheibe oder diejenige der weiteren Glasscheibe zwischen den beiden Scheiben angeordnet. Die zusätzliche Temporärbeschichtung auf der weiteren Glasscheibe erhöht insgesamt die Absorption von Wärmestrahlung, was vorteilhaft im Hinblick auf einer Energieersparnis ist.

Nach dem Biegen der Glasscheibe mit der Maskierungsbeschichtung und der Temporärbeschichtung wird die Temporärbeschichtung erfindungsgemäß wieder von der Glasscheibe entfernt. Die permanente Maskierungsbeschichtung verbleibt dabei auf der Glasscheibe. Die Entfernung der Temporärbeschichtung erfolgt bevorzugt mittels Wasser oder eines organischen Lösemittels, beispielsweise mit einem Alkohol, oder einem Wasser-Alkohol-Gemisch. Die Temporärbeschichtung kann beispielsweise manuell mit Schwämmen, Tüchern oder ähnlichen Hilfsmittel, welche mit dem Lösemittel getränkt sind, abgewaschen werden. In einer vorteilhaften Ausführung wird die Temporärbeschichtung in einer Waschmaschine entfernt. Die Waschmaschine arbeitet bevorzugt ohne Bürsten, um die Glasoberfläche und die Maskierungsbeschichtung zu schonen. Stattdessen wird die Temporärbeschichtung in der Waschmaschine lediglich mit dem Lösemittel abgespült, wozu die Oberfläche der Glasscheibe mit dem Lösemittel unter Druck beaufschlagt wird. Die Waschmaschine weist bevorzugt eine Filtereinrichtung auf, die dazu geeignet ist, das abgewaschene Pigment aus dem Lösemittel herauszufiltern. So kann im Rahmen eines Lösemittelkreislaufs verhindert werden, dass Pigmente die Scheibenoberflächen kontaminieren.

Die erfindungsgemäß gebogene Glasscheibe ist bevorzugt als Fahrzeugscheibe oder Bestandteil einer Fahrzeugscheibe vorgesehen, beispielsweise als monolithische Seitenscheibe, Heckscheibe oder Dachscheibe oder als Bestandteil einer laminierten Windschutzscheibe, Seitenscheibe, Heckscheibe oder Dachscheibe, insbesondere als Bestandteil einer laminierten Windschutzscheibe. Unter einer laminierten Scheibe wird hierbei eine Verbundscheibe verstanden.

Die Erfindung umfasst außerdem die Verwendung einer opaken Temporärbeschichtung, welche ein Pigment und keine Glasfritten enthält, auf mindestens einem Durchsichtsbereich einer Glasscheibe aus Kalk-Natron-Glas während des Biegens, wobei die Glasscheibe außer dem mindestens einen Durchsichtsbereich mindestens einen Maskierungsbereich aufweist, der mit einer permanenten opaken Maskierungsbeschichtung versehen ist, welche ein Pigment und Glasfritten enthält. Die Maskierungsbeschichtung, genauer gesagt die Glasfritten der Maskierungsbeschichtung, ist insbesondere in die Oberfläche der Glasscheibe eingebrannt. Die Temporärbeschichtung ist entfernbar, insbesondere mit organischen Lösungsmitteln wie Alkoholen.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Figur 1: eine Draufsicht auf eine Glasscheibe mit einem Maskierungsbereich und einem Durchsichtsbereich,
- Figur 2: Querschnitte durch eine Glasscheibe während verschiedener Schritte einer Ausführungsform des erfindungsgemäßen Verfahrens,
- Figur 3: Querschnitte durch verschiedene Ausgestaltungen einer Glasscheibe mit Maskierungsbeschichtung und Temporärbeschichtung,
- Figur 4: Querschnitte durch eine Glasscheibe mit Maskierungsbeschichtung und eine weitere Glasscheibe während verschiedener Schritte einer Ausführungsform des erfindungsgemäßen Verfahrens,
- Figur 5: ein Flussdiagramm einer Ausführungsform des erfindungsgemäßen Verfahrens.

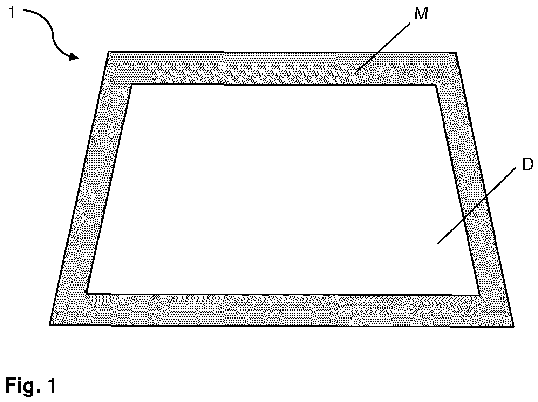

Figur 1 zeigt beispielhaft eine Draufsicht auf eine gattungsgemäße Glasscheibe 1. Die Glasscheibe 1 ist Bestandteil einer Windschutzscheibe eines Kraftfahrzeugs. Sie weist einen Maskierungsbereich M auf, der mit einer opaken Maskierungsbeschichtung versehen ist. Dieser Maskierungsbereich M ist in einem umlaufenden Randbereich angrenzend an die Seitenkanten der Glasscheibe 1 angeordnet, wie es bei Windschutzscheiben üblich ist. Die Maskierungsbeschichtung dient insbesondere dazu, einen Klebstoff vor UV-Strahlung zu schützen, mit dem die Glasscheibe 1 mit der Fahrzeugkarosserie verbunden wird. Der Maskierungsbereich M umgibt einen zentralen Durchsichtsbereich D, welcher transparent ist und daher geeignet ist, eine Durchsicht durch die Glasscheibe 1 zu gewährleisten und damit die eigentliche Funktion als Fensterscheibe zu erfüllen. Der Durchsichtsbereich D ist nicht mit der Maskierungsbeschichtung versehen.

Die Glasscheibe 1 ist gebogen, wie es im Fahrzeugbereich üblich ist. Die Maskierungsbeschichtung wird typischerweise auf die plane Glasscheibe 1 aufgebracht, welche danach gebogen wird. Da aufgrund der Maskierungsbeschichtung aber der Maskierungsbereich M während herkömmlicher Biegeprozesse stärker erwärmt wird als der transparente Durchsichtsbereich, können sich lokale Brechkraftunterschiede in der Nähe des Maskierungsbereichs ausbilden, welche sich beispielsweise als Verzerrungen bei Durchsicht durch die Scheibe äußern und ihre optische Qualität herabsetzen. Das verbesserte Biegungsverfahren gemäß der vorliegenden Erfindung hat die Aufgabe, diesen Effekt zu vermeiden.

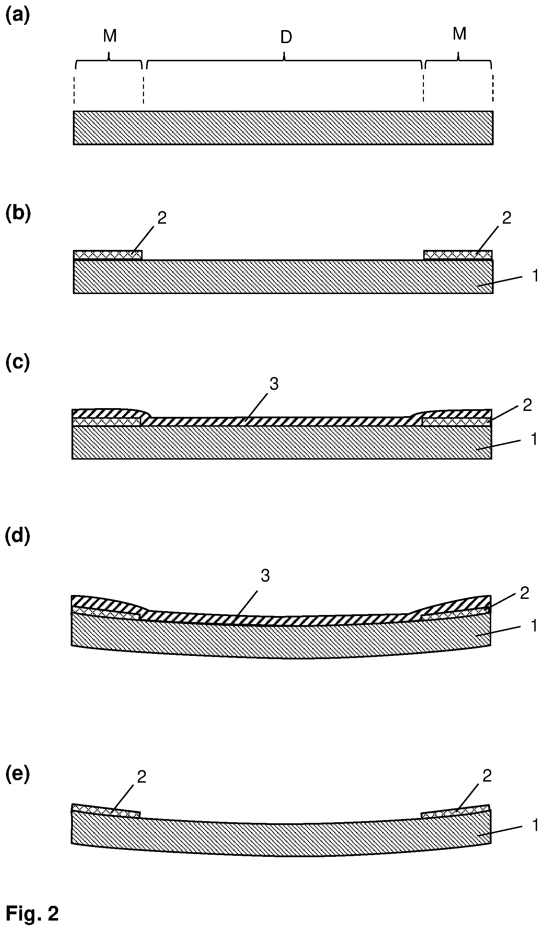

Figur 2 zeigt Querschnitte durch eine Glasscheibe 1 während verschiedener Schritte des erfindungsgemäßen Verfahrens zum Biegen von Glasscheiben. Zunächst wird eine plane Glasscheibe bereitgestellt (Figur 2a), beispielsweise eine Glasscheibe 1 aus Kalk-Natron-Glas mit einer Dicke von 2,1 mm. Die Glasscheibe weist einen umlaufenden Maskierungsbereich M auf und einen zentralen Durchsichtsbereich D.

Im Maskierungsbereich M wird eine permanente Maskierungsbeschichtung 2 aufgebracht (Figur 2b). Die Maskierungsbeschichtung 2 ist ein Emaille enthaltend ein Schwarzpigment und Glasfritten. Die Maskierungsbeschichtung 2 wird beispielsweise im Siebdruckverfahren auf eine Oberfläche der Glasscheibe 1 im Maskierungsbereich M aufgedruckt und anschließend eingebrannt, wobei sich die Glasfritten dauerhaft mit der Glasoberfläche verbinden. Die Maskierungsbeschichtung 2 weist beispielsweise eine Dicke von 15 µm auf.

Anschließend wird eine Temporärbeschichtung 3 auf dieselbe Oberfläche der Glasscheibe 1 aufgebracht (Figur 2c). Die Temporärbeschichtung 3 bedeckt erfindungsgemäß mindestens den Durchsichtsbereich D. In der dargestellten Ausführung bedeckt die Temporärbeschichtung 3 zusätzlich die Maskierungsbeschichtung 2 im Maskierungsbereich M. Die Temporärbeschichtung 3 ist also vollflächig auf die Oberfläche der Glasscheibe aufgebracht. Die Temporärbeschichtung 3 enthält ebenfalls ein Schwarzpigment, beispielsweise Pigmentruß, aber keine Glasfitten. Die Temporärbeschichtung 3 kann ebenfalls im Siebdruckverfahren aufgebracht werden, oder durch Aufpinseln oder Aufsprühen. Die Temporärbeschichtung 3 weist beispielsweise eine Dicke von 15 µm auf.

Die Glasscheibe 1 wird dann einem Biegeprozess unterzogen und in die gewünschte gekrümmte Form gebracht (Figur 2d). Aufgrund der vollständigen Belegung der Oberfläche der Glasscheibe 1 mit der Temporärbeschichtung 3 wird die Glasscheibe 1 während des Biegens homogen erwärmt. Es bilden sich keine lokalen Temperaturunterschiede aus, die zu lokalen Brechkraftschwankungen führen können.

Nach dem Biegen wird die Temporärbeschichtung 3 wieder von der Glasscheibe 1 entfernt (Figur 2e). Dazu wird sie beispielsweise mit einem Alkohol abgewaschen. Die permanente Maskierungsbeschichtung 2 verbleibt dabei auf der Oberfläche der Glasscheibe 1.

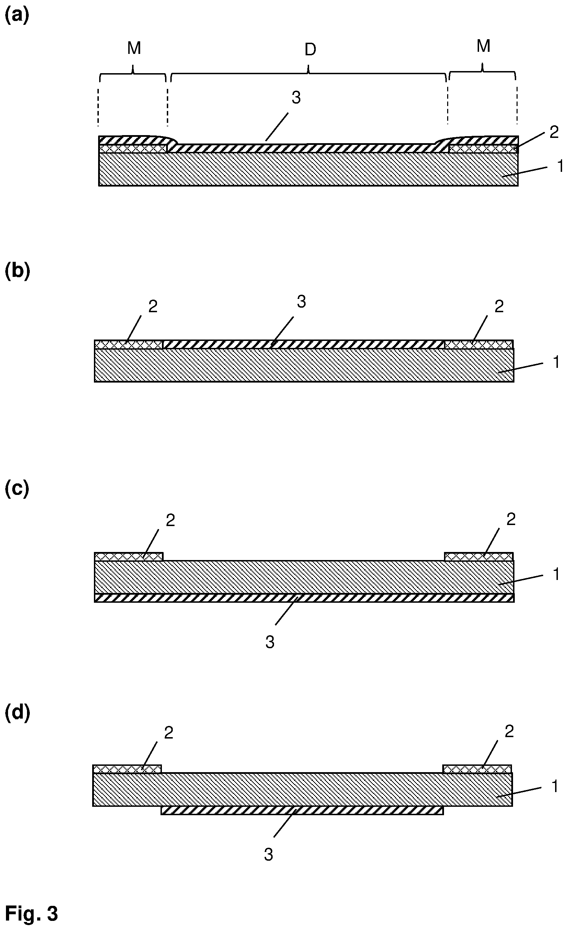

Figur 3 zeigt verschiedene Varianten der relativen Anordnung von Maskierungsbeschichtung 2 und Temporärbeschichtung 3:
(a) Die Temporärbeschichtung 3 ist auf derselben Oberfläche der Glasscheibe 1 aufgebracht wie die Maskierungsbeschichtung 2, und zwar vollflächig, so dass die Temporärbeschichtung 3 den Durchsichtsbereich D sowie die Maskierungsbeschichtung 2 im Maskierungsbereich M bedeckt. Diese Ausgestaltung entspricht derjenigen der Figur 2.
   Wird die Temporärbeschichtung 3 aufgedruckt, so kann es vorteilhaft sein, einen Randbereich von beispielsweise 3 mm von der Temporärbeschichtung 3 frei zu lassen, weil dies drucktechnisch einfacher zu realisieren ist als ein vollflächiger Druck.
(b) Die Temporärbeschichtung 3 ist hier ebenfalls auf derselben Oberfläche der Glasscheibe 1 aufgebracht wie die Maskierungsbeschichtung 2, allerdings ausschließlich im Durchsichtsbereich D. Die Maskierungsbeschichtung 2 im Maskierungsbereich M und die Temporärbeschichtung 3 im Durchsichtsbereich D bilden gemeinsam eine vollflächige Beschichtung der Oberfläche der Glasscheibe 1. Die Maskierungsbeschichtung 2 und die Temporärbeschichtung 3 sollten hinsichtlich ihres Absorptionsvermögens gegenüber Wärmestrahlung übereinstimmen, um eine homogene Beheizung der Glasscheibe 1 zu gewährleisten.
(c) Die Temporärbeschichtung 3 ist vollflächig auf derjenigen Oberfläche der Glasscheibe 1 aufgebracht, welche der Oberfläche mit der Maskierungsbeschichtung 2 gegenüberliegt.
(d) Die Temporärbeschichtung 3 ist nur im Durchsichtsbereich D auf derjenigen Oberfläche der Glasscheibe 1 aufgebracht, welche der Oberfläche mit der Maskierungsbeschichtung 2 gegenüberliegt.

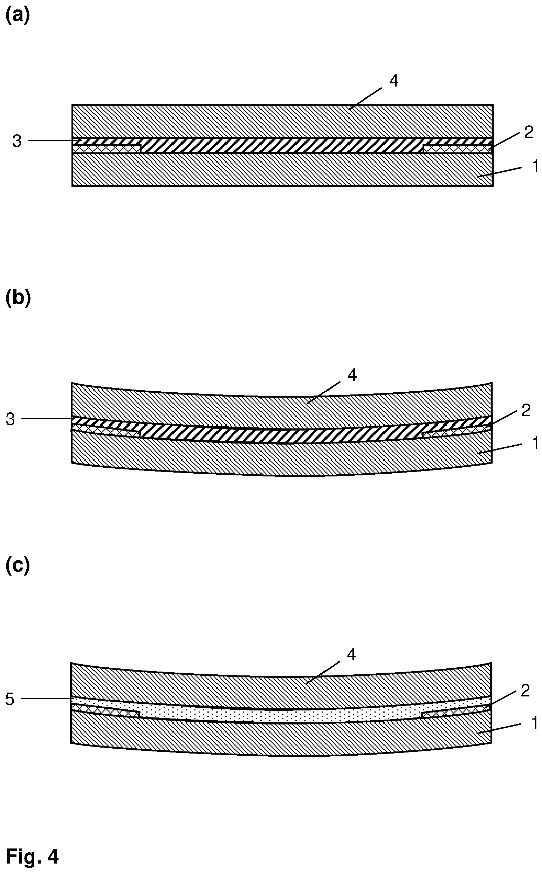

Figur 4 zeigt Querschnitte während einer besonders bevorzugten Ausführung des erfindungsgemäßen Verfahrens, wobei die Glasscheibe 1 dafür vorgesehen ist, mit einer weiteren Glasscheibe 4 zu einem Verbundglas verbunden zu werden. Die Glasscheibe 1 und die weitere Glasscheibe 4 sollen dazu in simultan-kongruenter Weise gemeinsam gebogen werden. Eine Oberfläche der Glasscheibe 1 ist im Maskierungsbereich M mit der Maskierungsbeschichtung 2 versehen und vollflächig mit der Temporärbeschichtung 3. Die weitere Glasscheibe 4 wird genau auf dieser Oberfläche flächig angeordnet, in der relativen Anordnung der Glasscheiben 1, 4, in der sie auch später zum Verbundglas laminiert werden sollen (Figur 4a).

Die Temporärbeschichtung 3 fungiert als Trennmittel zwischen den Glasscheiben 1, 4, so dass sie nach dem Biegen wieder voneinander gelöst werden können. Ein weiteres Trennmittel, wie beispielsweise ein aufgestäubter Puder, ist nicht erforderlich.

Die Glasscheiben 1, 4 werden dann gemeinsam einem Biegeprozess unterzogen (Figur 4b). Sie werden dann voneinander getrennt, zur Entfernung der Temporärbeschichtung 2 gewaschen und über eine thermoplastische Zwischenschicht 5, beispielsweise eine PVB-Folie mit einer Standarddicke von 0,76 mm, zur Verbundscheibe laminiert (Figur 4c).

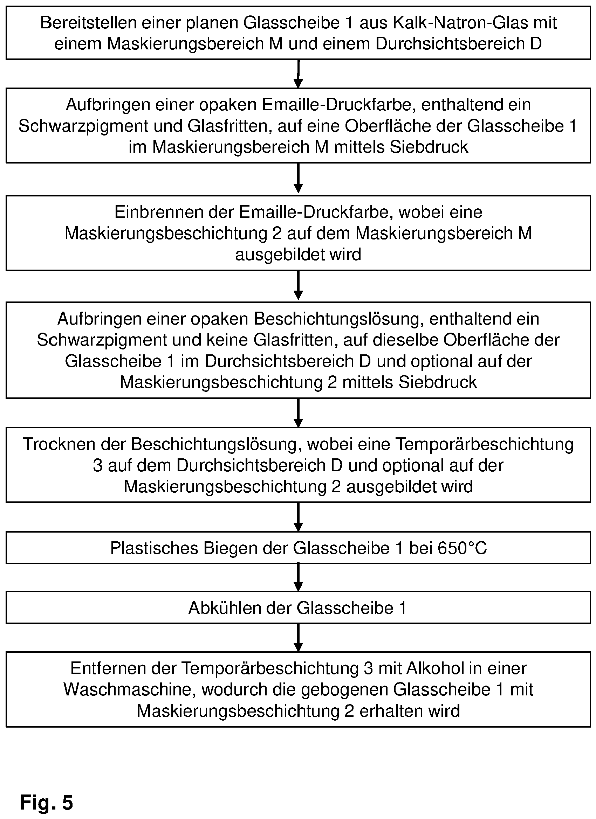

Figur 5 zeigt eine Ausführungsform des erfindungsgemäßen Verfahrens anhand eines Flussdiagramms.

### Beispiele

Eine plane Glasscheibe 1 (Kalk-Natron-Glas, 2,1 mm), welche als Bestandteil einer Windschutzscheibe für einen Personenkraftwagen vorgesehen war, wurde im Randbereich (Maskierungsbereich M) mit einer Maskierungsbeschichtung 2 versehen. Die Maskierungsbeschichtung 2 war aus einem handelsüblichen schwarzen Emaille ausgebildet, wie es als Abdeckdruck auf Fahrzeugscheiben üblich ist. Sie wurde im Siebdruckverfahren aufgedruckt und eingebrannt. Die Schichtdicke der Maskierungsbeschichtung 2 betrug 15 µm. Anschließend wurde im nicht von der Maskierungsbeschichtung 2 bedeckten Durchsichtsbereich D eine erfindungsgemäße Temporärbeschichtung 3 aufgedruckt, ebenfalls im Siebdruckverfahren, und getrocknet. Die Temporärbeschichtung 3 was aus einem schwarzen Pigment ausgebildet, enthielt aber keine Glasfritten.

Die Glasscheibe wurde im Anschluss mittels Schwerkraftbiegen und Pressbiegen gebogen bei einer Temperatur von etwa 650°C. Danach wurde die Temporärbeschichtung 3 mit einem in Alkohol getränkten Schwamm entfernt.

In Beispiel 1 wurde als Pigment Eisenoxidschwarz verwendet, in Beispiel 2 Pigmentruß (Carbon Black). Als Vergleichsbeispiel wurde eine Glasscheibe 1 mit der gleichen Maskierungsbeschichtung 2, aber ohne die Temporärbeschichtung 3 gebogen.

Zur Beurteilung der optischen Qualität wurde die optische Verzerrung, ermittelt durch Brechkraftmessung an einer Stelle des Durchsichtsbereichs, die 20 mm von der Maskierungsbeschichtung 2 entfernt war. Die optische Verzerrung wird in Millidioptrin (mdpt) angegeben.

Die gemessene optische Verzerrung für die Beispiele 1 und 2 und das Vergleichsbeispiel sind in Tabelle 1 zusammengefasst. Es ist zu erkennen, dass mit dem erfindungsgemäßen Verfahren eine Verringerung der optischen Verzerrungen um etwa 25% erreicht werden konnte. Die optische Qualität der gebogenen Glasscheibe 1 wurde deutlich verbessert.

**Tabelle 1**

| | Beispiel 1 | Beispiel 2 | Vergleichsbeispiel |
|---|---|---|---|
| Verzerrung | 142 mdpt | 155 mdpt | 202 mdpt |

### Bezugszeichenliste:

- (1): Glasscheibe
- (2): Maskierungsbeschichtung
- (3): Temporärbeschichtung
- (4): weitere Glasscheibe
- (5): thermoplastische Zwischenschicht

- (M): Maskierungsbereich der Glasscheibe 1
- (D): Durchsichtsbereich der Glasscheibe 1

## Patentansprüche

1. Verfahren zum Biegen einer Glasscheibe mit mindestens einem Maskierungsbereich (M) und mindestens einem Durchsichtsbereich (D), umfassend die folgenden Verfahrensschritte:
(a) Bereitstellen einer planen Glasscheibe (1) aus Kalk-Natron-Glas;
(b) Aufbringen einer permanenten opaken Maskierungsbeschichtung (2) auf eine Oberfläche der Glasscheibe (1) im mindestens einen Maskierungsbereich (M), wobei die Maskierungsbeschichtung (2) ein Pigment und Glasfritten enthält; und Aufbringen einer opaken Temporärbeschichtung (3) auf eine Oberfläche der Glasscheibe (1) im mindestens einen Durchsichtsbereich (D), wobei die Temporärbeschichtung (3) ein Pigment und keine Glasfritten enthält;
(c) Biegen der Glasscheibe (1); und
(d) Entfernen der Temporärbeschichtung (3), wobei die Maskierungsbeschichtung (2) auf der Glasscheibe (1) verbleibt.

2. Verfahren nach Anspruch 1, wobei die Maskierungsbeschichtung (2) und die Temporärbeschichtung (3) auf die gleiche Oberfläche der Glasscheibe (1) aufgebracht werden.

3. Verfahren nach Anspruch 2, wobei zunächst die Maskierungsbeschichtung (2) im mindestens einen Maskierungsbereich (M) aufgebracht wird und anschließend die Temporärbeschichtung (3) im mindestens einen Durchsichtsbereich (D) und auf der Maskierungsbeschichtung (2) aufgebracht wird.

4. Verfahren nach Anspruch 1, wobei die Maskierungsbeschichtung (2) auf eine Oberfläche der Glasscheibe (1) und die Temporärbeschichtung (3) auf die gegenüberliegende Oberfläche der Glasscheibe (1) aufgebracht werden.

5. Verfahren nach einem der Ansprüche 1 bis 4, wobei die Maskierungsbeschichtung (2) ein Schwarzpigment enthält, bevorzugt Pigmentruß, Anilinschwarz, Beinschwarz, Eisenoxidschwarz, Spinellschwarz und/oder Graphit.

6. Verfahren nach einem der Ansprüche 1 bis 5, wobei die Temporärbeschichtung (3) ein Schwarzpigment enthält, bevorzugt Pigmentruß, Anilinschwarz, Beinschwarz, Eisenoxidschwarz, Spinellschwarz und/oder Graphit.

7. Verfahren nach einem der Ansprüche 1 bis 6, wobei die Maskierungsbeschichtung (2) im Siebdruck-Verfahren aufgebracht wird.

8. Verfahren nach einem der Ansprüche 1 bis 7, wobei die Temporärbeschichtung (3) im Siebdruck-Verfahren, durch Aufsprühen oder Aufpinseln aufgebracht wird.

9. Verfahren nach einem der Ansprüche 1 bis 8, wobei die Temporärbeschichtung (3) mittels eines Lösungsmittels entfernt wird, bevorzugt mit Wasser und/oder einem Alkohol.

10. Verfahren nach einem der Ansprüche 1 bis 9, wobei die Glasscheibe (1) in Verfahrensschritt (c) auf ihre Erweichungstemperatur erhitzt und mit der Kontaktfläche eines Biegewerkzeugs geformt wird, bevorzugt durch Schwerkraftbiegen, Pressbiegen und/oder Saugbiegen.

11. Verfahren nach einem der Ansprüche 1 bis 10, wobei die Glasscheibe (1) gemeinsam mit einer weiteren Glasscheibe (4) gebogen wird, wobei die Glasscheibe (1) und die weitere Glasscheibe (4) flächig kongruent aufeinander angeordnet sind.

12. Verfahren nach Anspruch 11, wobei die Temporärbeschichtung (3) auf der Oberfläche der Glasscheibe (1) angeordnet ist, die der weiteren Glasscheibe (4) zugewandt ist.

13. Verfahren nach Anspruch 11 oder 12, wobei auch die weitere Glasscheibe (4) mit einer Temporärbeschichtung (3) versehen ist, die ein Pigment und keine Glasfritten enthält.

14. Verfahren nach einem der Ansprüche 1 bis 13, wobei die Glasscheibe (1) eine Dicke von 1 mm bis 10 mm aufweist.

## Claims

1. Method for bending a glass sheet that has at least one masking region (M) and at least one transparent region (D), comprising the following method steps:
(a) providing a flat glass sheet (1) made of soda lime glass;
(b) applying a permanent opaque masking coating (2) to a surface of the glass sheet (1) in the at least one masking region (M), wherein the masking coating (2) contains a pigment and glass frits, and applying an opaque temporary coating (3) to a surface of the glass sheet (1) in the at least one transparent region (D), wherein the temporary coating (3) contains a pigment and no glass frits;
(c) bending the glass sheet (1); and
(d) removing the temporary coating (3), wherein the masking coating (2) remains on the glass sheet (1).

2. Method according to claim 1, wherein the masking coating (2) and the temporary coating (3) are applied to the same surface of the glass sheet (1).

3. Method according to claim 2, wherein firstly the masking coating (2) is applied in the at least one masking region (M) and subsequently the temporary coating (3) is applied in the at least one transparent region (D) and on the masking coating (2).

4. Method according to claim 1, wherein the masking coating (2) is applied to a surface of the glass sheet (1) and the temporary coating (3) is applied to the opposite surface of the glass sheet (1).

5. Method according to any of claims 1 to 4, wherein the masking coating (2) contains a black pigment, preferably carbon black, aniline black, bone black, iron oxide black, spinel black, and/or graphite.

6. Method according to any of claims 1 to 5, wherein the temporary coating (3) contains a black pigment, preferably carbon black, aniline black, bone black, iron oxide black, spinel black, and/or graphite.

7. Method according to any of claims 1 to 6, wherein the masking coating (2) is applied via the screen printing method.

8. Method according to any of claims 1 to 7, wherein the temporary coating (3) is applied via the screen printing method, by spraying or brushing on.

9. Method according to any of claims 1 to 8, wherein the temporary coating (3) is removed by means of a solvent, preferably using water and/or an alcohol.

10. Method according to any of claims 1 to 9, wherein the glass sheet (1) in method step (c) is heated to its softening point and is shaped using the contact surface of a bending tool, preferably by gravity bending, press bending, and/or suction bending.

11. Method according to any of claims 1 to 10, wherein the glass sheet (1) is bent together with a further glass sheet (4), wherein the glass sheet (1) and the further glass sheet (4) are arranged in a flat congruent manner on top of one another.

12. Method according to claim 11, wherein the temporary coating (3) is arranged on the surface of the glass sheet (1) which faces the further glass sheet (4).

13. Method according to claim 11 or 12, wherein the further glass sheet (4) is also provided with a temporary coating (3) containing a pigment and no glass frits.

14. Method according to any of claims 1 to 13, wherein the glass sheet (1) has a thickness of 1 mm to 10 mm.

## Revendications

1. Procédé permettant le bombage d'une vitre en verre comportant au moins une zone de masquage (M) et au moins une zone transparente (D), comprenant les étapes de procédé suivantes :
(a) fourniture d'une vitre en verre (1) plane en verre sodocalcique ;
(b) application d'un revêtement de masquage (2) opaque permanent sur une surface de la vitre en verre (1) dans l'au moins une zone de masquage (M), dans lequel le revêtement de masquage (2) contient un pigment et des frittes de verre ; et application d'un revêtement temporaire (3) opaque sur une surface de la vitre en verre (1) dans l'au moins une zone transparente (D), dans lequel le revêtement temporaire (3) contient un pigment et aucune fritte de verre ;
(c) bombage de la vitre en verre (1) ; et
(d) retrait du revêtement temporaire (3), dans lequel le revêtement de masquage (2) reste sur la vitre en verre (1).

2. Procédé selon la revendication 1, dans lequel le revêtement de masquage (2) et le revêtement temporaire (3) sont appliqués sur la même surface de la vitre en verre (1).

3. Procédé selon la revendication 2, dans lequel le revêtement de masquage (2) est d'abord appliqué dans l'au moins une zone de masquage (M) et le revêtement temporaire (3) est ensuite appliqué dans l'au moins une zone transparente (D) et sur le revêtement de masquage (2).

4. Procédé selon la revendication 1, dans lequel le revêtement de masquage (2) est appliqué sur une surface de la vitre en verre (1) et le revêtement temporaire (3) est appliqué sur la surface opposée de la vitre en verre (1).

5. Procédé selon l'une des revendications 1 à 4, dans lequel le revêtement de masquage (2) contient un pigment noir, de préférence pigment noir de carbone, noir d'aniline, noir d'os, oxyde de fer noir, spinelle noir et/ou graphite.

6. Procédé selon l'une des revendications 1 à 5, dans lequel le revêtement temporaire (3) contient un pigment noir, de préférence pigment noir de carbone, noir d'aniline, noir d'os, oxyde de fer noir, spinelle noir et/ou graphite.

7. Procédé selon l'une des revendications 1 à 6, dans lequel le revêtement de masquage (2) est appliqué par procédé de sérigraphie.

8. Procédé selon l'une des revendications 1 à 7, dans lequel le revêtement temporaire (3) est appliqué par procédé de sérigraphie, par vaporisation ou au pinceau.

9. Procédé selon l'une des revendications 1 à 8, dans lequel le revêtement temporaire (3) est retiré au moyen d'un solvant, de préférence avec de l'eau et/ou un alcool.

10. Procédé selon l'une des revendications 1 à 9, dans lequel la vitre en verre (1), dans l'étape de procédé (c), est chauffée à sa température de ramollissement et est formée par la surface de contact d'un outil de bombage, de préférence par bombage par gravité, bombage à la presse et/ou bombage par aspiration.

11. Procédé selon l'une des revendications 1 à 10, dans lequel la vitre en verre (1) est bombée conjointement avec une autre vitre en verre (4), dans lequel la vitre en verre (1) et l'autre vitre en verre (4) sont disposées à plat de manière congruente l'une sur l'autre.

12. Procédé selon la revendication 11, dans lequel le revêtement temporaire (3) est disposé sur la surface de la vitre en verre (1) qui fait face à l'autre vitre en verre (4).

13. Procédé selon la revendication 11 ou 12, dans lequel l'autre vitre en verre (4) est également pourvue d'un revêtement temporaire (3) qui contient un pigment et aucune fritte de verre.

14. Procédé selon l'une des revendications 1 à 13, dans lequel la vitre en verre (1) présente une épaisseur allant de 1 mm à 10 mm.
